# DEMANDE DE BREVET EUROPEEN

(11) **EP 1 258 844 A1**
(43) Date de publication de la demande: **20.11.2002**
(21) Numéro de dépôt: 02291189.5
(22) Date de dépôt: 13.05.2002
(51) Int. Cl.: G07F 19/00

(54) **Procédé et système pour l'établissement de la preuve d'une transaction électronique**

(30) Priorité: 14.05.2001 FR 0106334
(71) Demandeur: Protecrea, 92350 Le Plessis Robinsson (FR)
(72) Inventeur: Combe, Caroline, 75001 Paris (FR)
(74) Mandataire: de Roquemaurel, Bruno

(57) **Abrégé**

Procédé pour l'établissement de la preuve d'une transaction électronique entre au moins deux personnes reliées entre elles par l'intermédiaire d'un réseau de transmission (1), le procédé comprenant les étapes consistant à : insérer dans un document des conditions de la transaction une signature électronique transmise par le réseau de transmission par une des deux personnes ; établir de manière certaine le lien entre l'identité de la personne signataire et la signature électronique utilisée par celle-ci ; transmettre par le réseau (1) le document signé, à un organisme d'enregistrement (10) qui reçoit le document signé et détermine la date de réception de celui-ci ; générer un document récapitulatif contenant une référence au document signé et la date de réception du document ; transmettre par le réseau (1) le document récapitulatif à la personne signataire et y insérer la signature électronique de celle-ci ; transmettre par le réseau (1) le document récapitulatif signé à l'organisme d'enregistrement (10) qui l'archive de manière sécuritaire avec le document signé des conditions de la transaction.

## Description

La présente invention concerne un procédé pour établir la preuve qu'une transaction ou une convention entre plusieurs parties a bien été effectuée, lorsque celle-ci a été effectuée par l'intermédiaire d'un réseau de transmission de données numérique public.

Elle s'applique notamment, mais non exclusivement, au commerce électronique ou à la conclusion de contrats par l'intermédiaire du réseau Internet.

A l'heure actuelle, lorsque deux parties souhaitent signer un contrat par l'intermédiaire d'un réseau de transmission de données tel que le réseau Internet, le document contenant l'objet et les clauses du contrat est associé à une signature électronique de chaque partie signataire du contrat, chaque partie conservant ensuite une copie signée du document. Les signatures électroniques sont générées à l'aide d'un outil logiciel de signature qui élabore une signature à partir du document à signer et d'une clé secrète connue uniquement du signataire. De cette manière, la signature électronique est liée au document signé.
Plus précisément, la signature électronique consiste à crypter tout ou partie du document, par exemple une empreinte de ce dernier, à l'aide de la clé secrète. Les algorithmes de cryptage utilisés à cet effet sont basés sur l'utilisation de deux clés, à savoir une clé privée ou secrète et d'une clé publique qui contrairement à la clé privée, peut être transmise sur le réseau.

Pour déterminer si un document a effectivement été signé par une personne, il suffit de décrypter la signature à l'aide de la clé publique de la personne, de manière à obtenir le contenu du document ou une partie de celui-ci et de comparer la partie décryptée avec le document associé à la signature. Si la comparaison fait apparaître une identité, le document a effectivement été signé par la personne à qui appartient la clé privée.

Ce processus fait apparaître plusieurs défauts. Pour faire apparaître le lien entre la signature électronique d'une personne et un document ainsi signé, cela suppose que l'on dispose encore de la clé publique de la personne, ce qui peut s'avérer difficile plusieurs années après la signature du document. En outre, l'identité de la personne qui a apposé une signature électronique peut être contestée.

Pour tenter de supprimer un tel risque de contestation, on a mis en place ce que l'on appelle des autorités de certification qui délivrent des certificats garantissant le lien entre l'identité d'une personne et la signature électronique utilisée par cette personne, en particulier la clé publique correspondante. A cet effet, un certificat est un fichier contenant des informations d'identification d'une personne et le résultat du cryptage de ces informations en utilisant une clé privée de l'autorité de certification et la clé publique de la personne. De cette manière, seule l'autorité de certification peut émettre de tels certificats. Par ailleurs, la correspondance entre une clé publique et l'identité d'une personne peut être vérifiée grâce au certificat et à l'aide de la clé publique de l'autorité de certification qui a émis le certificat, qui permet de décrypter le certificat et ainsi obtenir les informations d'identité contenues dans le certificat.

De cette manière, la combinaison du document contenant le contrat, des signatures électroniques des signataires du contrat et des certificats des signatures électroniques utilisées, permet d'établir la preuve du consentement des parties au contrat.

Toutefois, rien ne permet de garantir que ces éléments de preuve ne pourront pas être modifiés. Si une telle opération n'est pas possible au moment de la transaction, il n'est pas possible d'établir qu'elle ne pourra pas être effectuée quelques années plus tard grâce à l'évolution de la technologie.
En outre, les certificats délivrés par une autorité de certification présentent une durée de vie limitée, de l'ordre de une à quelques années, si bien qu'après l'expiration des certificats, il ne sera plus possible d'établir de manière certaine le lien entre l'une des parties au contrat et la signature de celle-ci.

Par ailleurs, dans le cas de transactions commerciales faisant intervenir une étape de paiement d'une certaine somme par un acheteur à un vendeur, il est nécessaire d'établir le lien entre l'identité de l'acheteur et le paiement effectué, en particulier lorsque le paiement est effectué à l'aide d'un numéro d'identification de carte bancaire. En effet, à l'heure actuelle, de nombreux achats électroniques sont effectués en utilisant le numéro d'une carte bancaire obtenu frauduleusement.

La présente invention a pour but de remédier à ces inconvénients en proposant un procédé et un système permettant de prouver la réalité d'une transaction, même plusieurs années après sa conclusion, sachant que pour qu'une telle preuve soit valable, elle ne peut pas être détenue ni fournie par une partie à la transaction, et sachant qu'une autorité de certification est partie à la transaction, dans la mesure où elle intervient pour garantir la correspondance entre l'identité des signataires et leurs signatures respectives.

Cet objectif est atteint par la prévision d'un procédé pour l'établissement de la preuve d'une transaction électronique entre au moins deux personnes reliées entre elles par l'intermédiaire d'un réseau de transmission de données numériques, la transaction étant définie par des conditions consignées dans au moins un document, le procédé comprenant les étapes consistant à :
- insérer dans le document des conditions de la transaction une signature électronique fournie par l'intermédiaire du réseau de transmission par au moins une personne signataire des deux personnes, et
- établir de manière certaine le lien entre des informations d'identité de la personne signataire fournies par celle-ci et la signature électronique utilisée par la personne signataire,
caractérisé en ce qu'il comprend en outre les étapes consistant à :
- transmettre par le réseau de transmission le document signé des conditions de la transaction, à un organisme d'enregistrement,
- recevoir par l'organisme d'enregistrement le document signé et déterminer une date de réception du document signé par l'organisme d'enregistrement,
- générer un document récapitulatif contenant une référence au document signé et la date de réception du document,
- transmettre par le réseau de transmission le document récapitulatif à au moins la personne signataire,
- insérer dans le document récapitulatif une signature électronique de la personne signataire,
- transmettre par le réseau de transmission le document récapitulatif signé à l'organisme d'enregistrement,
- recevoir par l'organisme d'enregistrement le document récapitulatif signé, et
- archiver de manière sécuritaire par l'organisme d'enregistrement le document signé des conditions de la transaction, et le document récapitulatif signé

Avantageusement, le procédé selon l'invention comprend en outre les étapes consistant à :
- déterminer une date de réception par l'organisme d'enregistrement du document récapitulatif signé, et
- archiver la date de réception par l'organisme d'enregistrement du document récapitulatif signé.

Selon une autre particularité de l'invention, le procédé comprend en outre les étapes consistant à :
- effectuer par la partie signataire un paiement électronique par l'intermédiaire du réseau de transmission,
- transmettre par le réseau de transmission un document de compte-rendu de paiement à l'organisme d'enregistrement,
- déterminer une date de réception par l'organisme d'enregistrement du document de compte-rendu de paiement, et
- archiver la date de réception par l'organisme d'enregistrement du document de compte-rendu de paiement.

Selon une première variante du procédé selon l'invention, la transaction fait intervenir au moins deux parties signataires, chaque document signé comprenant la signature électronique de toutes les parties signataires, l'organisme d'enregistrement déterminant et archivant la date de réception de la signature électronique de chaque partie signataire.

De préférence, chaque partie peut accéder pour signature au document des conditions de la transaction et au document récapitulatif au moyen d'un code d'accès.

Selon une seconde variante du procédé selon l'invention, les conditions de la transaction sont consignées dans un document de conditions particulières et un document de conditions générales, la signature électronique de chaque partie signataire étant insérée dans ces deux documents qui sont transmis par l'intermédiaire du réseau de transmission à l'organisme d'enregistrement, l'organisme d'enregistrement déterminant et consignant la date de réception de ces deux documents dans le document récapitulatif.

De préférence, les signatures électroniques utilisées pour signer un document sont obtenues par cryptage asymétrique du document à l'aide d'une clé privée connue seulement de la partie signataire, le décryptage de la signature pouvant être effectué à l'aide d'une clé publique associée à la clé privée et librement accessible.

Egalement de préférence, le lien entre les informations d'identité de la partie signataire et la clé publique de celle-ci est établit par un certificat émis par une autorité de certification et accessible par l'intermédiaire du réseau de transmission.

L'invention concerne également un système pour l'établissement de la preuve d'une transaction électronique entre au moins deux personnes munies de calculateurs respectifs reliés entre eux par l'intermédiaire d'un réseau de transmission de données numériques, la transaction étant définie par des conditions consignées dans au moins un document accessible sur un serveur de transaction par l'intermédiaire du réseau de transmission,
caractérisé en ce qu'il comprend un serveur d'enregistrement relié au réseau de transmission comportant :
- des moyens pour recevoir des documents dans lesquels sont insérées des signatures électroniques,
- des moyens d'horodatage pour dater la réception de documents,
- des moyens pour générer des documents récapitulatifs de transaction dans lesquels sont consignées les dates de réception des documents de consignes de transaction signés, et
- des moyens d'archivage pour archiver de manière sécuritaire les documents signés reçus, en association avec leurs dates de réception respectives.

De préférence, le serveur d'enregistrement comprend des moyens de sauvegarde pour sauvegarder toutes les transactions archivées, sur des supports non modifiables.

Un mode de réalisation préféré de l'invention sera décrit ci-après, à titre d'exemple non limitatif, avec référence aux dessins annexés dans lesquels
La figure 1 représente sous la forme d'un schéma-bloc un système permettant la mise en oeuvre du procédé selon l'invention ;
Les figures 2a et 2b représentent schématiquement, sous la forme d'un organigramme, les différentes étapes du procédé selon l'invention.

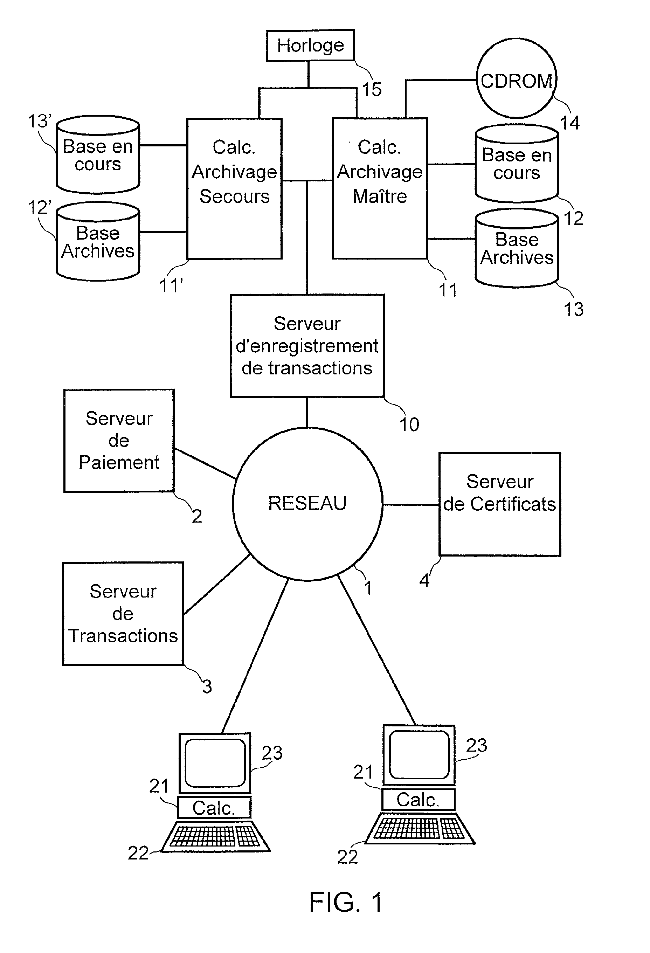

La figure 1 représente un système permettant la mise en oeuvre du procédé selon l'invention. Ce système comprend un réseau de transmission de données 1, qui peut être privé ou public comme le réseau Internet. Ce réseau permet de mettre en relation les calculateurs 21 d'utilisateurs avec des serveurs de transactions 3, des serveurs de paiement 2 et des serveurs de certificats 4 d'autorités de certification.
Les calculateurs d'utilisateurs sont par exemple des micro-ordinateurs reliés à un écran 23 et un organe de commande 22 tel qu'un clavier, une souris ou un stylet. Les micro-ordinateurs peuvent être de type PC ou assistant personnel, ou encore téléphone mobile.

Les serveurs de transactions 3 sont par exemple des sites Internet de commerce électronique, ou proposant la souscription en ligne de contrats tels que des contrats d'assurance.

Les serveurs de paiement 2 sont par exemple des sites Internet d'organismes bancaires permettant d'effectuer un paiement en ligne de manière sécurisée, notamment au moyen d'une carte bancaire.

Les serveurs de certificats 4 sont des organismes émettant des certificats permettant d'établir le lien entre une signature électronique et des informations d'identité d'une personne. Un certificat comprend un fichier contenant des informations d'identité d'une personne, associé au résultat du cryptage de ces informations. Généralement, le procédé de cryptage employé est de type asymétrique, mettant en oeuvre une clé publique et une clé privée. La clé publique utilisée est celle de la signature électronique de la personne et la clé privée est celle de l'organisme émetteur de certificats. De cette manière, seul l'organisme émetteur de certificats peut émettre de tels certificats qui présentent par ailleurs une durée de validité limitée pour éviter les falsifications.

Le procédé selon l'invention met en oeuvre un serveur d'enregistrement de transactions 10 connecté en permanence, par l'intermédiaire du réseau 1 aux serveurs de transactions 3 et de certificats 4, et éventuellement aux serveurs de paiement 2 lorsque la transaction à enregistrer fait intervenir un paiement.
Le serveur d'enregistrement de transactions 10 est relié à un calculateur d'archivage 11 permettant d'archiver toutes les transactions enregistrées par le serveur 10. A cet effet, le calculateur d'archivage est connecté à un périphérique de stockage de données 12 dans lequel sont stockées toutes les transactions en cours, et à un périphérique de stockage 13 de transactions archivées, dans lequel sont stockées toutes les transactions terminées. En outre, le contenu du périphérique de stockage de données d'archivage 13 est sauvegardé périodiquement, par exemple tous les jours ou toutes les semaines, sur un support d'enregistrement non modifiable et inaltérable, tel qu'un CDROM ou un DVD-ROM.

De cette manière, une transaction sera sauvegardée sur tous les supports produits à partir de la date de la transaction, ce qui empêche toute falsification des supports, qui ferait inévitablement apparaître des incohérences.

De préférence, chaque sauvegarde est effectuée plusieurs fois sur des supports différents qui sont stockés dans des lieux protégés respectifs différents, de manière à se prémunir de tout risque de détérioration ou de vol.

Pour une plus grande sécurité, l'ensemble du dispositif d'archivage comprenant le calculateur d'archivage 11, les périphériques de stockage des transactions 12, 13, est doublé par un dispositif d'archivage redondant, fonctionnant en parallèle et comprenant également un calculateur d'archivage 11' connecté au serveur d'enregistrement de transactions 10, et des périphériques de stockage de transactions 12' et 13' reliés au calculateur 11'.

En outre, les calculateurs 11, 11' sont connectés à une horloge 15 très précise, par exemple une horloge atomique, pour horodater tous les événements liés à l'établissement d'une transaction, fournis par le serveur d'enregistrement de transactions 10.

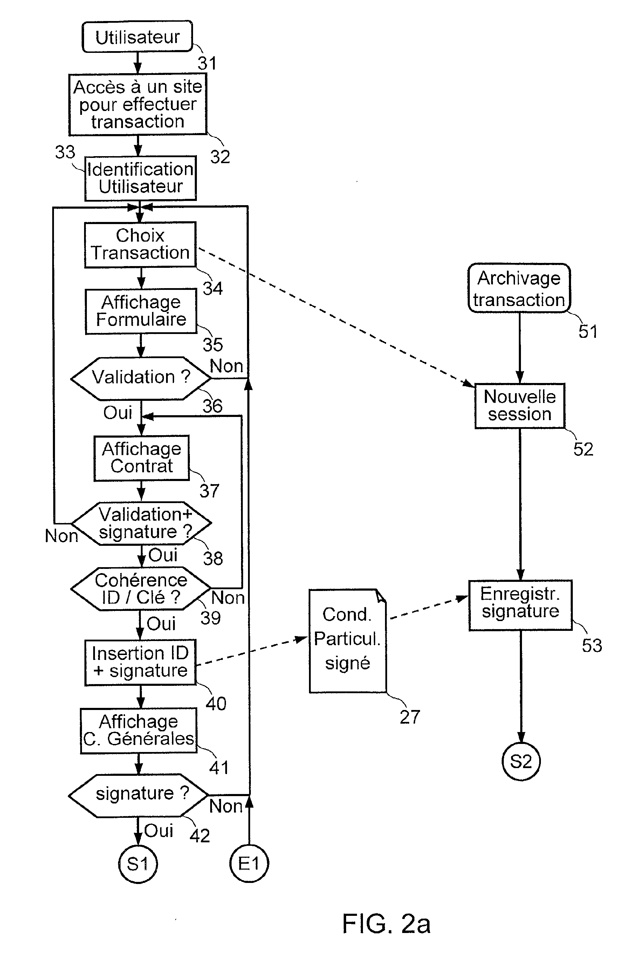

Sur la figure 2a, lorsqu'un utilisateur souhaite effectuer une transaction en ligne, il exécute une procédure 31 dans laquelle il se connecte 32 sur le serveur de transactions 3 de son choix. Avant de pouvoir effectuer une transaction, l'utilisateur doit s'identifier 33 en fournissant un certificat valable (ou tout autre procédé d'identification notamment biométrique). S'il n'en possède pas, on peut lui proposer de lui en attribuer un en lui donnant accès à un serveur de certificats 4.
A la fourniture d'un certificat, le serveur de transaction 3 accède au serveur de certificats correspondant pour en vérifier la validité.
Après s'être ainsi identifié de manière certaine, l'utilisateur est invité à choisir 34 une transaction, dans le cas où le serveur 3 sélectionné propose plusieurs transactions. Le choix d'une transaction déclenche sur le serveur 10 d'enregistrement de transactions une procédure 51 qui commence par une étape 52 d'ouverture d'une nouvelle session.

Dans certaines transactions, l'utilisateur peut être amené à remplir 35 un formulaire. Par exemple, dans le cas de la souscription à une assurance automobile, un tel formulaire contient des champs où l'utilisateur doit introduire des informations le concernant comme son adresse, ou relatives au véhicule à assurer.

Après validation 36 des informations saisies, les conditions particulières du contrat incluant les informations saisies sont affichées 37 à l'écran 23 de l'utilisateur. L'utilisateur peut également ne pas remplir le formulaire et revenir à l'étape 34 de choix d'une transaction, ce qui met fin à la session correspondante sur le serveur 10 d'enregistrement de transactions.

Si à l'étape 37, l'utilisateur est d'accord avec les conditions particulières qui lui sont ainsi présentées, il doit les valider en fournissant 38 sa signature électronique qui est obtenue en cryptant le document contenant les conditions particulières à l'aide de sa clé privée (ou tout autre procédé de cryptologie). S'il n'est pas d'accord, il peut annuler la transaction et revenir par exemple à l'étape 34. Cette opération déclenche sur le serveur 10 la fin de la session correspondante.

Si l'utilisateur a validé les conditions particulières du contrat, le serveur de transactions 3 vérifie la signature électronique émise par l'utilisateur à l'aide du certificat fourni à l'étape 33, en décryptant celle-ci à l'aide de la clé publique (ou tout autre procédé utilisé) de l'utilisateur figurant dans le certificat, et en comparant le document obtenu avec le document des conditions particulières d'origine. Puis, il accède au serveur de certificat 4 correspondant pour vérifier 39 la cohérence des informations d'identité fournies par l'utilisateur à l'étape 33 ou 35 avec celles qui sont contenues dans le certificat.
Si les informations d'identité fournies sont incohérentes avec le certificat, on retourne à l'étape 37. A ce stade de la procédure 31, l'utilisateur a également la possibilité d'annuler la transaction en cours en revenant à l'étape 34.

Si au contraire, à l'étape 39, le certificat fourni est valable et les informations d'identité cohérentes, un document 27 contenant les conditions particulières de la transaction et la signature électronique fournie par l'utilisateur à l'étape 38, est généré 40 et transmis au serveur d'enregistrement 10. A la réception de ce document, le serveur 10 le transmet 53 au calculateur 11, 11' qui y introduit la date et heure de réception obtenue auprès de l'horloge 15 et le stocke dans le périphérique de stockage 12, 12' des transactions en cours, dans un espace réservé à la session en cours.

Ensuite, le serveur de transactions 3 envoie 41 les conditions générales du contrat au calculateur 21 de l'utilisateur qui apparaissent alors à l'écran 23.
Si l'utilisateur est d'accord avec ces conditions générales, il envoie à nouveau sa signature. Dans le cas contraire, l'utilisateur a la possibilité d'annuler la transaction, ce qui permet de retourner à l'étape 34.

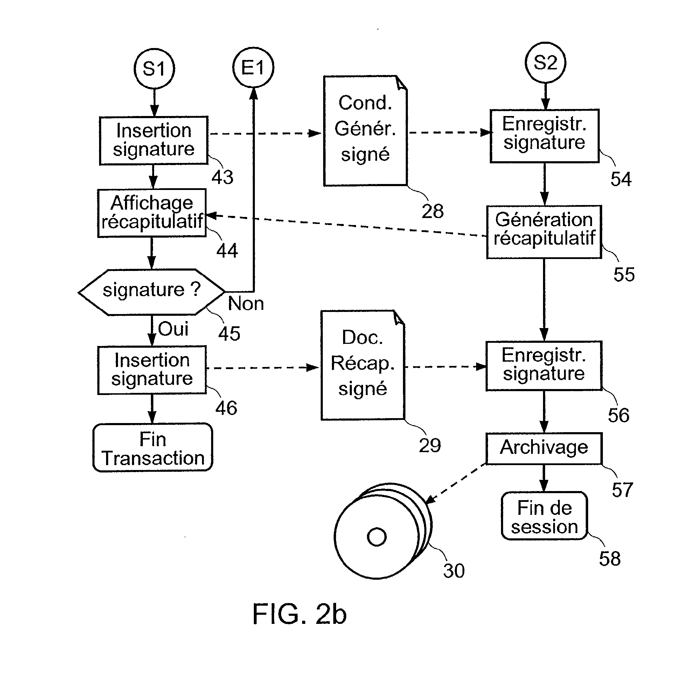

Si l'opérateur a signé 42 les conditions générales en fournissant une signature électronique obtenue en cryptant le document contenant les conditions générales avec sa clé privée, le serveur de transactions 3 vérifie signature électronique fournie et génère 43 un document 28 contenant les conditions générales et cette signature. Le document ainsi signé est ensuite envoyé au serveur d'enregistrement 10 (figure 2b). A la réception de ce document, le serveur 10 le transmet 54 au calculateur 11, 11' qui y insère la date et heure courante de réception obtenue auprès de l'horloge 15 et le stocke dans le périphérique de stockage 12, 12' des transactions en cours, dans l'espace réservé à la session en cours.

Ensuite, le serveur 10 génère 55 et transmet au serveur de transactions 3 un document récapitulatif dans lequel apparaissent toutes les opérations effectuées par l'utilisateur et transmises au serveur d'enregistrement, à savoir :
- une référence du document 27 contenant les conditions particulières, stocké dans le périphérique de stockage des transactions en cours, associée à la date de signature correspondante (correspondant à la date d'envoi par le serveur de transactions 3 au serveur d'enregistrement 10 du document des conditions particulières), et
- une référence du document 28 contenant les conditions générales, stocké dans le périphérique de stockage des transactions en cours, associée à la date de signature correspondante (correspondant à la date d'envoi par le serveur de transactions 3 au serveur d'enregistrement 10 du document des conditions générales).

A l'étape 44 suivante de la procédure 31, le serveur de transactions 3 déclenche l'affichage sur l'écran 21 de l'utilisateur du document récapitulatif reçu et invite l'utilisateur à y apposer sa signature électronique en fournissant une version cryptée de ce document récapitulatif à l'aide de sa clé privée (ou tout autre moyen de signature électronique).
Si l'utilisateur annule 45 la transaction, la procédure 31 se poursuit à l'étape 34. Sinon, la fourniture de la signature électronique par l'utilisateur déclenche à nouveau la vérification de cette signature et l'insertion 46 de cette signature dans le document récapitulatif de la transaction. La procédure 31 se termine par l'envoi du document récapitulatif signé 29 au serveur d'enregistrement 10. A la réception de ce document, le serveur 10 le transmet 56 au calculateur 11, 11' qui y insère la date et heure courante de réception obtenue auprès de l'horloge 15 et le stocke dans le périphérique de stockage 12, 12' des transactions en cours, dans l'espace réservé à la session en cours. L'ensemble des enregistrements effectués pour la session qui a débuté à l'étape 52 est ensuite transféré 57 dans le périphérique d'archivage 13, et il est mis fin 58 à la session en cours sur le serveur d'enregistrement 10.

A la fin de la procédure 31, on peut prévoir de transmettre à l'utilisateur, par exemple par messagerie électronique, un message contenant tout l'historique de la transaction, ce message étant émis par le serveur de transaction 3 qui reçoit toutes les informations nécessaires, notamment d'horodatage, du serveur d'enregistrement 10.

Bien entendu, le serveur d'enregistrement 10 est conçu pour pouvoir gérer plusieurs sessions simultanément. Dans ce cas, pour offrir une plus grande sécurité, on peut prévoir de tenir un journal dans lequel sont consignées successivement avec horodatage et mention d'un numéro de session correspondant, toutes les opérations effectuées par le serveur 10, ce journal étant stocké dans le périphérique d'archivage 13.

La procédure 31 qui vient d'être décrite concerne la signature de contrats ne faisant pas intervenir de paiement en ligne, ni la signature de plusieurs utilisateurs.

Dans le cas où la transaction doit faire l'objet d'un paiement en ligne, l'étape 42 est suivie d'une étape de paiement auprès d'un serveur de paiement 2. Lorsque le paiement a été effectué, le serveur de paiement transmet au serveur de transaction 3 un compte-rendu de paiement contenant notamment le montant du paiement, qui est retransmis pour enregistrement au serveur d'enregistrement 10. Cet événement de paiement est horodaté et consigné dans le document récapitulatif qui est généré par le serveur d'enregistrement et transmis pour approbation 45 par l'utilisateur au serveur de transaction 3. Si le paiement n'est pas effectué par l'utilisateur, la transaction est annulée et on revient à l'étape 34.

Dans le cas où plusieurs utilisateurs sont parties à un même contrat, le serveur de transaction 3 crée un numéro de transaction pour plusieurs utilisateurs, l'annule à la demande d'un ou de tous les utilisateurs partie au contrat, et le supprime lorsque tous les utilisateurs faisant partie du contrat ont exécuté toutes les étapes de la procédure 31. Sur le serveur d'enregistrement 10, ce numéro de transaction correspond à une seule et même session qui peut donc rester active plusieurs jours, c'est-à-dire tant que la transaction correspondante n'a pas été terminée ou annulée.

Lorsqu'un utilisateur ouvre une nouvelle session de transaction, il reçoit du serveur de transactions 3 un code d'accès qu'il peut ensuite donner par tout moyen, aux autres utilisateurs avec lesquels il souhaite conclure le contrat.

On peut prévoir qu'à l'ouverture d'une nouvelle session de transaction, l'utilisateur fournisse les informations d'identité (par exemple le nom) des autres personnes avec lesquelles il souhaite conclure le contrat. Les autres utilisateurs ne pourront accéder à la transaction ainsi ouverte que si les informations d'identification et le code d'accès qu'ils fournissent correspondent respectivement à ceux fournis par l'utilisateur qui a ouvert la session de transaction et au code d'accès de cette dernière.

Lors des appositions de signatures, les dates d'apposition de ces signatures sont consignées par le serveur d'enregistrement 10. Par contre, un document signé n'est transmis au serveur d'enregistrement uniquement lorsque toutes les parties au contrat l'on signé.

Le dernier document récapitulatif de la transaction qui est généré à l'étape 55 contient donc toutes les opérations de signature sur les documents de conditions particulières et générales, effectuées par toutes les parties au contrat. De même, chaque document signé (document des conditions particulières, document des conditions générales et document récapitulatif) contient l'identité et la signature de toutes les parties au contrat.

Alternativement, on peut prévoir qu'un document signé est transmis au serveur d'enregistrement à chaque signature par une partie au contrat (étapes 53, 54, 56). Cette solution permet d'éviter au serveur de transactions 3 d'avoir à gérer le nombre de parties à un contrat.

Lorsque toutes les parties d'un contrat ont exécuté la procédure 31, on peut également prévoir de transmettre à chacune, par exemple par messagerie électronique, un message contenant tout l'historique de la transaction, ce qui permet à chaque partie de vérifier le consentement des autres parties.

En cas de contestation par une partie de la signature d'un contrat, il suffit de lire un ou plusieurs supports d'enregistrement 30 sélectionnés au hasard, produits lors des sauvegardes du périphérique de stockage 13, 13', effectuées après la date supposée de la conclusion du contrat, de manière à obtenir un exemplaire des conditions particulières et générales signées et un exemplaire du document récapitulatif signé, et de récupérer le certificat utilisé par la partie contestataire qui est censé être archivé par l'autorité de certification après la fin de sa validité, pour obtenir la clé publique (ou tout autre moyen utilisé) de la partie contestataire. Il suffit ensuite de vérifier que la clé publique (ou tout autre moyen utilisé) ainsi obtenue a bien été utilisée pour signer les documents obtenus à partir des supports d'enregistrements lus.

## Revendications

1. Procédé pour l'établissement de la preuve d'une transaction électronique entre au moins deux personnes reliées entre elles par l'intermédiaire d'un réseau de transmission (1) de données numériques, la transaction étant définie par des conditions consignées dans au moins un document (27, 28), le procédé comprenant les étapes consistant à :
- insérer (40, 43) dans le document (27, 28) des conditions de la transaction une signature électronique fournie par l'intermédiaire du réseau de transmission par au moins une personne signataire des deux personnes, et
- établir (39) de manière certaine le lien entre des informations d'identité de la personne signataire fournies par celle-ci et la signature électronique utilisée par la personne signataire,
**caractérisé en ce qu'**il comprend en outre les étapes consistant à :
- transmettre par le réseau de transmission (1) le document signé (27, 28) des conditions de la transaction, à un organisme d'enregistrement (10),
- recevoir par l'organisme d'enregistrement le document signé (27, 28) et déterminer une date de réception du document signé par l'organisme d'enregistrement,
- générer (55) un document récapitulatif (29) contenant une référence au document signé et la date de réception du document,
- transmettre par le réseau de transmission (1) le document récapitulatif à au moins la personne signataire,
- insérer (46) dans le document récapitulatif (29) une signature électronique de la personne signataire,
- transmettre par le réseau de transmission (1) le document récapitulatif signé à l'organisme d'enregistrement (10),
- recevoir par l'organisme d'enregistrement le document récapitulatif signé, et
- archiver (57) de manière sécuritaire par l'organisme d'enregistrement (10) le document signé (27, 28) des conditions de la transaction, et le document récapitulatif signé (29).

2. Procédé selon la revendication 1,
**caractérisé en ce qu'**il comprend en outre les étapes consistant à :
- déterminer une date de réception par l'organisme d'enregistrement (10) du document récapitulatif signé (29), et
- archiver la date de réception par l'organisme d'enregistrement du document récapitulatif signé.

3. Procédé selon la revendication 1 ou 2,
**caractérisé en ce qu'**il comprend en outre les étapes consistant à :
- effectuer par la partie signataire un paiement électronique par l'intermédiaire du réseau de transmission (1),
- transmettre par le réseau de transmission un document de compte-rendu de paiement à l'organisme d'enregistrement (10),
- déterminer une date de réception par l'organisme d'enregistrement du document de compte-rendu de paiement, et
- archiver (57) la date de réception par l'organisme d'enregistrement du document de compte-rendu de paiement.

4. Procédé selon l'une des revendications 1 à 3,
**caractérisé en ce que** la transaction fait intervenir au moins deux parties signataires, chaque document signé (27, 28, 29) comprenant la signature électronique de toutes les parties signataires, l'organisme d'enregistrement (10) déterminant et archivant la date de réception de la signature électronique de chaque partie signataire.

5. Procédé selon la revendication 4,
**caractérisé en ce que** chaque partie peut accéder pour signature au document des conditions de la transaction (27, 28) et au document récapitulatif (29) au moyen d'un code d'accès.

6. Procédé selon l'une des revendications 1 à 5,
**caractérisé en ce que** les conditions de la transaction sont consignées dans un document de conditions particulières (27) et un document de conditions générales (28), la signature électronique de chaque partie signataire étant insérée (40, 43) dans ces deux documents qui sont transmis par l'intermédiaire du réseau de transmission (1) à l'organisme d'enregistrement (10), l'organisme d'enregistrement déterminant et consignant la date de réception de ces deux documents dans le document récapitulatif (29).

7. Procédé selon l'une des revendications 1 à 6,
**caractérisé en ce que** les signatures électroniques utilisées pour signer un document sont obtenues par cryptage asymétrique du document à l'aide d'une clé privée connue seulement de la partie signataire, le décryptage de la signature pouvant être effectué à l'aide d'une clé publique associée à la clé privée et librement accessible.

8. Procédé selon la revendication 7,
**caractérisé en ce que** le lien entre les informations d'identité de la partie signataire et la clé publique de celle-ci est établit par un certificat émis par une autorité de certification (4) et accessible par l'intermédiaire du réseau de transmission (1).

9. Système pour l'établissement de la preuve d'une transaction électronique entre au moins deux personnes munies de calculateurs (21) respectifs reliés entre eux par l'intermédiaire d'un réseau de transmission (1) de données numériques, la transaction étant définie par des conditions consignées dans au moins un document (27, 28) accessible sur un serveur de transaction (3) par l'intermédiaire du réseau de transmission,
**caractérisé en ce qu'**il comprend un serveur d'enregistrement (10) relié au réseau de transmission (1) comportant:
- des moyens pour recevoir des documents dans lesquels sont insérées des signatures électroniques,
- des moyens d'horodatage (15) pour dater la réception de documents,
- des moyens pour générer des documents récapitulatifs de transaction dans lesquels sont consignées les dates de réception des documents de consignes de transaction signés, et
- des moyens d'archivage (12, 12', 13, 13', 14) pour archiver de manière sécuritaire les documents signés (27, 28, 29) reçus, en association avec leurs dates de réception respectives.

10. Système selon la revendication 9,
**caractérisé en ce que** le serveur d'enregistrement (10) comprend des moyens de sauvegarde (14) pour sauvegarder toutes les transactions archivées, sur des supports non modifiables.
